# EUROPEAN PATENT APPLICATION

(11) **EP 4 197 934 A1**
(43) Date of publication of application: **21.06.2023**
(21) Application number: 21215271.4
(22) Date of filing: 16.12.2021
(51) Int. Cl.: B65D 25/14, B29C 63/00, B29C 65/00

(54) **A RECEPTACLE FOR RETROFITTING WITH A RESERVOIR**

(71) Applicant: HUSQVARNA AB, 561 82 Huskvarna (SE)
(72) Inventor: Litzinger, Klaus, 89155 Erbach (DE)
(74) Representative: Finkele, Rolf

(57) **Abstract**

An apparatus (**100**) and a method (**400**) to facilitate a reuse of a reservoir (**200**) is provided. The apparatus (**100**) includes a receptacle (**300**) and the reservoir (**200**). The receptacle (**300**) is retrofitted with the reservoir (**200**). The receptacle (**300**) includes a body portion (**310**) adapted to store a fluid therein. The body portion (**310**) includes an outer surface (**312**) and an inner surface (**314**) disposed opposite to the outer surface (**312**). Further, the body portion (**310**) defines a fluid receiving opening (**316**) to receive the fluid to be stored in contact with the inner surface **(314).** The receptacle **(300)** is characterized in that the outer surface **(312)** is composed of a thermally sensitive material. The outer surface **(312)** is further adapted to adhere to an inner side **(202)** of the reservoir **(200)** upon contact and maintain a constant adherence with the inner side **(202)** of the reservoir **(200).**

## Description

### TECHNICAL FIELD

The present disclosure relates to a reservoir. More specifically, the present disclosure relates to an apparatus and a method to facilitate reuse of the reservoir.

### BACKGROUND

A reservoir such as a steel drum or the like may be used as a means for storing a variety of fluids including liquids and semi liquids such as adhesives, lubricants, or other fluids. The fluid stored in the reservoir may be removed by first removing a top cover of the reservoir and then pouring or pumping out the stored fluid. The fluid once removed from the reservoir may leave stains or sludge on an inner surface of the reservoir.

Many-a-times, it is desirable to use the reservoir for storing a fluid different from what was previously stored therein. One of the examples may be to reuse a reservoir previously used for oil or lubricants for industrial purpose for storing rainwater. To prevent contamination in the new fluid to be stored in the reservoir, a general practice may be to clean the reservoir or to provide a liner to cover the stain or sludge on the inner surface of the reservoir.

An example of a reservoir with a removable liner is provided in United States patent 2,912,136 (hereinafter referred to as '136 reference). The '136 reference provides a container for corrosive materials which utilizes standard containers such as fiber drums or ordinary steel barrels, which are normally used for transporting non-corrosive materials. The container is further provided with a corrosion-resistant liner, which may be easily inserted and removed. Another example of a reservoir with a removable liner is provided in United States patent 5,232,117 (hereinafter referred to as '117 reference). The ' 117 reference provides a metal drum having a detachable lining removable therefrom after a first use to allow for the reuse or recycling of the drum.

However, making of the liner is an expensive process and so is the cleaning process of the reservoir. Thus, there is a need of an apparatus or a method that may be inexpensive and may still facilitate reuse of the reservoir for storing the fluid, which may be different from what was previously stored therein.

### SUMMARY

In view of the above, it is an objective of the present invention to solve or at least reduce the drawbacks discussed above. The objective is at least partially achieved by an apparatus. The apparatus includes a receptacle and a reservoir. The receptacle is retrofitted with the reservoir. The receptacle includes a body portion adapted to store a fluid therein. The body portion includes an outer surface and an inner surface disposed opposite to the outer surface. Further, the body portion defines a fluid receiving opening to receive the fluid to be stored in contact with the inner surface. The receptacle is characterized in that the outer surface is composed of a thermally sensitive material. The outer surface is further adapted to adhere to an inner side of the reservoir upon contact and maintain a constant adherence with the inner side of the reservoir.

Thus, the present disclosure provides the receptacle which may be easily retrofitted with the reservoir of any shape and size for storage of the fluid therein. The receptacle maintains constant adherence with the inner side of the reservoir due to material characteristics of the receptacle. The receptacle does not slip inside the reservoir due to the weight of the fluid poured therein for storage. The receptacle prevents the fluid from contamination due to any stain, sludge, or leftovers of some other fluid previously stored in the reservoir. The receptacle eliminates the need for thorough cleaning of the reservoir after the first use of the reservoir, and therefore saves cleaning costs which may have otherwise incurred. The receptacle further eliminates the need for a liner or the like, which may be generally expensive to manufacture and install inside the reservoir.

According to an embodiment of the present disclosure, the outer surface adheres to the reservoir upon application of heat. The material of the receptacle may illustrate adhesive properties upon application of heat. Thus, there may not be any need to externally apply an adhesive to the outer surface of the receptacle or the inner side of the reservoir.

According to an embodiment of the present disclosure, the receptacle is expandable. The receptacle may easily adapt to the shape and size of the reservoir to which the receptacle may be retrofitted. Further, the receptacle may shrink again after the usage and may be easily held or stored.

According to an embodiment of the present disclosure, a method for retrofitting the receptacle with the reservoir involves coupling a periphery of the outer surface of the receptacle with a periphery of the reservoir. The method further involves providing a source of warm fluid to feed the fluid receiving opening of the receptacle with the warm fluid so that the receptacle is ensured to be in an expanded state. Afterwards, the outer surface of the receptacle adheres to the inner side of the reservoir upon contact in the expanded state and maintains constant adherence with the inner side of the reservoir. The method is easy to execute and cost-effective as well. The method may be processed with limited requirement of any tools, technical knowledge, or special skills.

According to an embodiment of the present disclosure, the reservoir is cleaned before retrofitting of the receptacle with the reservoir. The reservoir may be cleaned or washed to wash away any large stain, sludge, or leftovers especially on the inner side of the reservoir. The substantially cleaned reservoir may offer a planar surface or substantially planar surface on the inner side for proper adherence of the receptacle.

According to an embodiment of the present disclosure, a U-shaped circular bracket is used for coupling the periphery of the outer surface of the receptacle with the periphery of the reservoir. The bracket may provide a secure grip as well as stability to the receptacle when the fluid receiving opening of the receptacle is fed with the warm fluid. However, the bracket may also provide the secure grip as well as stability to the receptacle throughout the lifecycle of the receptacle till the receptacle is retrofitted with the reservoir.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** shows a perspective view of a reservoir for storing a fluid, in accordance with an aspect of the present disclosure;
**FIG. 2** shows a cross-sectional front view of a reservoir with a receptacle in an unexpanded state, in accordance with an aspect of the present disclosure;
**FIG. 3** shows a cross-sectional front view of a reservoir with a receptacle in an expanded state, in accordance with an aspect of the present disclosure; and
**FIG. 4** shows a flow chart highlighting the steps involved in retrofitting of a receptacle with a reservoir, in accordance with an aspect of the present disclosure.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention may be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

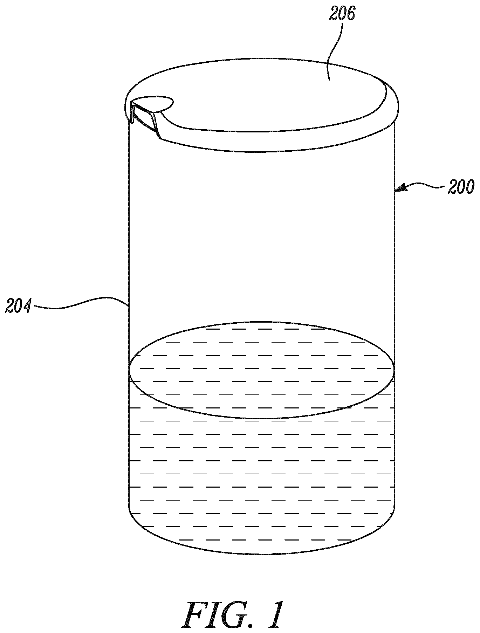

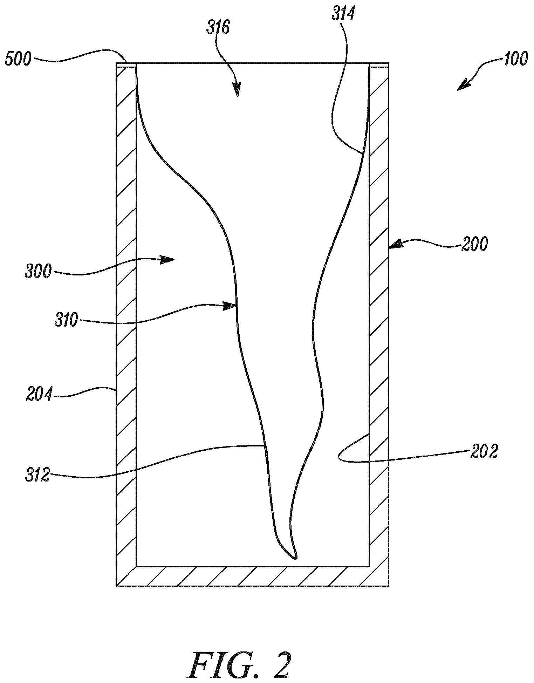

**FIG. 1** illustrates a reservoir **200** for storing a fluid. The reservoir **200** of the present disclosure is cylindrical in shape. However, the reservoir **200** may have any standard shape as per personal preference or application requirements. The reservoir **200** has an inner side **202** (shown in **FIG. 2**) and an outer side **204** disposed opposite to the inner side **202**. The texture of the inner side **202** of the reservoir **200** may be different from the texture of the outer side **204** of the reservoir **200**. The reservoir **200** is additionally covered by a cover **206** to prevent entry of any foreign elements that may contaminate the stored fluid when the fluid is not required for use for any application. The fluid may be stored in the inner side **202** of the reservoir **200**. The fluid may be any liquid, or semi liquid such as adhesives, lubricants, or other fluids. Further, the liquid may be a mixture of one or more liquids or semi liquids without limiting the scope of the present disclosure.

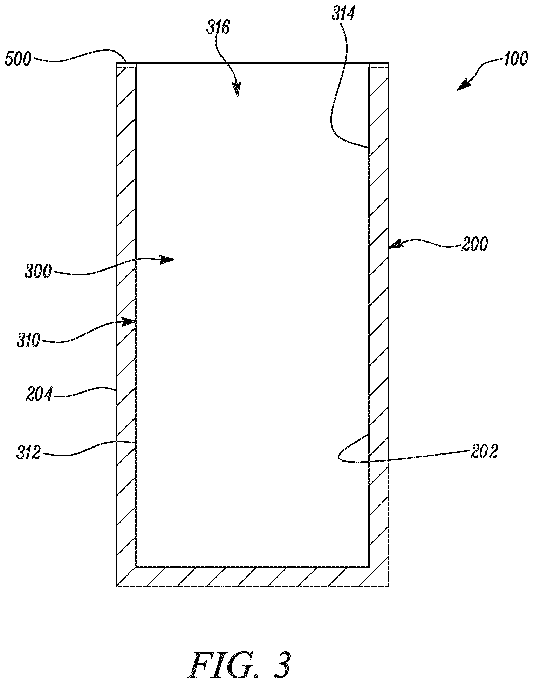

The fluid stored in the reservoir **200** may be used or consumed for various applications thereby rendering the reservoir **200** empty. In some embodiments, the re-usage of the reservoir **200** may be application based. The reservoir **200** may then be reused for storing a fluid, which may be different from the fluid previously stored in the reservoir **200**. The fluid previously stored in the reservoir **200** may leave behind a plurality of stains or sludge, which may be cleaned with a cleaning agent such as water and the like to prevent the fluid to be stored from contamination. However, the cleaning may not be sufficient to get rid of the stains or sludge entirely. Hence, as illustrated in **FIGS. 2** and **3**, an apparatus **100** is provided to prevent the fluid to be stored from contamination during the reuse of the reservoir **200**. An exemplary usage may be storage of rainwater.

The apparatus **100** includes a receptacle **300** and the reservoir **200**. The receptacle **300** is retrofitted with the reservoir **200**. The receptacle **300** may be one or more of a sac, a bag, a pouch, or the like that may be expandable. The receptacle **300** may easily adapt to shape and size of the reservoir **200** to which the receptacle **300** may be retrofitted. Further, the receptacle **300** may shrink again after the use and may be easily held or stored until use for other applications.

The receptacle **300** includes a body portion **310** adapted to store a fluid therein. The body portion **310** includes an outer surface **312** and an inner surface **314** disposed opposite to the outer surface **312**. The texture of the inner surface **314** of the receptacle **300** may be different from the texture of the outer surface **312** of the receptacle **300**. Further, the body portion **310** defines a fluid receiving opening **316** to receive the fluid to be stored in contact with the inner surface **314**. The inner surface **314** may be composed of any material known in the art without limiting the scope of the present disclosure.

As shown in **FIGS. 2** and **3****,** in some embodiments, a U-shaped circular bracket **500** may be used for coupling the periphery of the outer surface **312** of the receptacle **300** with the periphery of the reservoir **200**. In some embodiments, a plurality of clips may be used for coupling the periphery of the outer surface **312** of the receptacle **300** with the periphery of the reservoir **200**. In some embodiments, a plurality of fasteners, such as, but not limited to, rivets may be used for coupling the periphery of the outer surface **312** of the receptacle **300** with the periphery of the reservoir **200**. However, the coupling may be obtained by any means known in the art without limiting the scope of the present disclosure.

The outer surface **312** of the receptacle **300** is composed of a thermally sensitive material. The thermally sensitive material may respond to heat and may show different properties on exposure to heat. In some embodiments, the thermally sensitive material may show adhesive properties upon application of heat. The outer surface **312** is further adapted to adhere to the inner side **202** of the reservoir **200** upon contact and maintain a constant adherence with the inner side **202** of the reservoir **200** (as shown in **FIG. 3**). Thus, the thermally sensitive material may show adhesive properties upon application of heat and the outer surface **312** of the receptacle **300** may adhere to the reservoir **200** upon application of heat. Hence, advantageously there is no need to externally apply an adhesive to the outer surface **312** of the receptacle **300** or the inner side **202** of the reservoir **200**, which is otherwise a clumsy task and may incur additional, unnecessary time, effort, and costs. Further, the apparatus **100** may know be readily used to store the fluid for various applications.

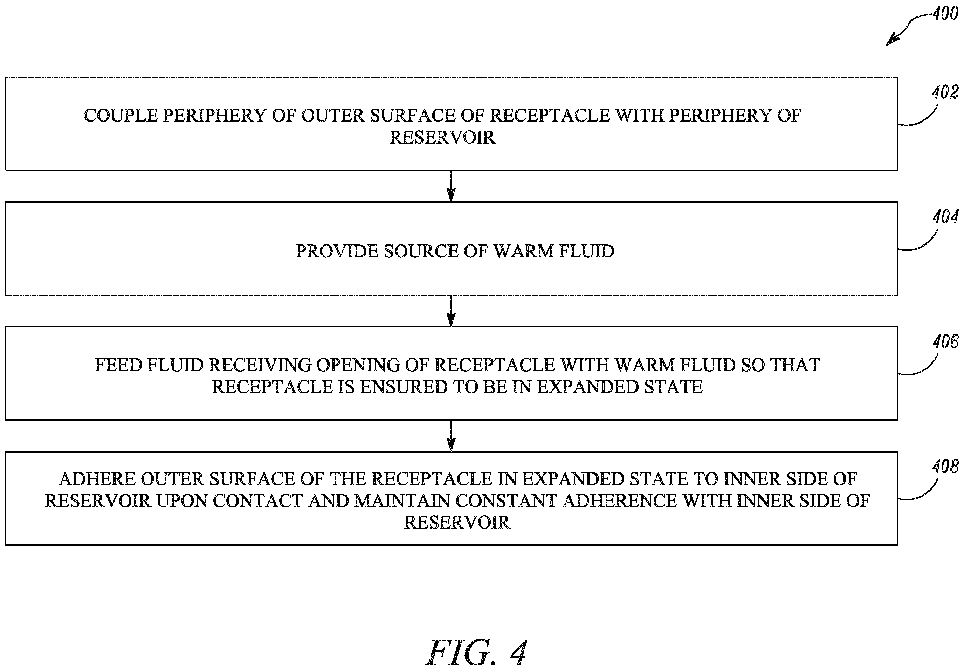

A method **400** for retrofitting the receptacle **300** with the reservoir **200** is illustrated in **FIG. 4**. At step **402**, the method **400** involves coupling a periphery of the outer surface **312** of the receptacle **300** with a periphery of the reservoir **200**. In some embodiments, the U-shaped circular bracket **500** may be used for coupling the periphery of the outer surface **312** of the receptacle **300** with the periphery of the reservoir **200** (as shown in **FIGS. 2** and **3**).

At step **404**, the method **400** involves providing a source of warm fluid (not shown). The source of warm fluid may be a source of hot air, or warm water or any other such fluid. At step **406**, the method **400** further includes feeding the fluid receiving opening **316** of the receptacle **300** with the warm fluid. In some embodiments, the source of warm fluid may be a warm air blowing machine. However, the warm fluid may be provided by any means known in the art without limiting the scope of the present disclosure.

Further, the coupling at the step **402** between the periphery of the outer surface **312** of the receptacle **300** and the periphery of the reservoir **200** may provide secure grip as well as stability to the receptacle **300** when the fluid receiving opening **316** of the receptacle **300** is fed with the warm fluid. However, the U-shaped circular bracket **500** may also provide secure grip as well as stability to the receptacle **300** throughout the lifecycle of the receptacle **300** until which the receptacle **300** is retrofitted with the reservoir **200**. Further, the feeding of the fluid receiving opening **316** of the receptacle **300** with the warm fluid ensures the receptacle **300** to be in an expanded state.

Further, at step **408**, the outer surface **312** of the receptacle **300** in the expanded state adheres to the inner side **202** of the reservoir **200** upon contact and maintains constant adherence with the inner side **202** of the reservoir **200**, thereby completing the retrofitting process of the receptacle **300** with the reservoir **200** (as shown in **FIG. 3**). Thus, the method **400** for retrofitting the receptacle **300** with the reservoir **200** is easy and cost-effective. The method **400** may be processed with limited requirement of any tools, technical knowledge, or special skills.

In some embodiments, the method **400** may also involve cleaning of the reservoir **200** before the step **402**. The reservoir **200** may be cleaned before retrofitting of the receptacle **300** with the reservoir **200**. The reservoir **200** may be casually cleaned or washed to wash away any large stain, sludge, or leftovers especially on the inner side **202** of the reservoir **200**. The substantially cleaned reservoir **200** may offer a planar surface or substantially planar surface on the inner side **202** for proper adherence of the receptacle **300**.

The replacement of the receptacle **300** with a new receptacle (not shown) in case of change of the fluid stored in the reservoir **200** may be done by firstly removing the receptacle **300**. The receptacle **300** may be removed by uncoupling the periphery of the outer surface **312** of the receptacle **300** with the periphery of the reservoir **200** and then removing the body portion **310** of the receptacle **300** adhered to the inner side **202** of the reservoir **200** by any means known in the art without limiting the scope of the present disclosure. Further, a new receptacle may be retrofitted with the reservoir **200** using the method **400** illustrated in **FIG. 4**. In some embodiments, the new receptacle may also be applied directly onto the existing receptacle **300**.

Thus, the present disclosure provides the receptacle **300** which may be easily retrofitted with the reservoir **200** of any shape and size for storage of the fluid therein. The receptacle **300** due to the material characteristics maintains constant adherence with the inner side **202** of the reservoir **200**. The receptacle **300** does not slip inside the reservoir **200** due to the weight of the fluid poured therein for storage. The receptacle **300** prevents the fluid from contamination due to the stain, sludge, or leftovers of some other fluid previously stored in the reservoir **200**. The receptacle **300** eliminates the need for thorough cleaning of the reservoir **200** after the first use of the reservoir **200**. The receptacle **300** further eliminates the need for a liner, which is generally expensive to manufacture and install inside the reservoir **200**.

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- **100**: Apparatus
- **200**: Reservoir
- **202**: Inner Side
- **204**: Outer Side
- **206**: Cover
- **300**: Receptacle
- **310**: Body Portion
- **312**: Outer Surface
- **314**: Inner Surface
- **316**: Fluid Receiving Opening
- **500**: U-Shaped Bracket

## Claims

1. A receptacle **(300)** for retrofitting with a reservoir **(200)**, the receptacle **(300)** comprising:
a body portion **(310)** adapted to store a fluid therein, wherein the body portion **(310)** comprises:
an outer surface **(312);** and
an inner surface **(314)** disposed opposite to the outer surface **(312),**
wherein the body portion **(310)** defines a fluid receiving opening **(316)** to receive the fluid to be stored in contact with the inner surface **(314);**
**characterized in that:**
the outer surface **(312)** is composed of a thermally sensitive material; and
the outer surface **(312)** is adapted to adhere to an inner side (202) of the reservoir **(200)** upon contact and maintain a constant adherence with the inner side **(202)** of the reservoir **(200)**.

2. The receptacle **(300)** of claim 1, wherein the outer surface **(312)** adheres to the reservoir **(200)** upon application of heat.

3. The receptacle **(300)** of any of the preceding claims, wherein the receptacle **(300)** is expandable.

4. A method **(400)** for retrofitting a receptacle **(300)** with a reservoir **(200)**, the method **(400)** comprising:
coupling a periphery of an outer surface **(312)** of the receptacle **(300)** with a periphery of the reservoir **(200)**;
providing a source of warm fluid;
feeding a fluid receiving opening **(316)** of the receptacle **(300)** with the warm fluid so that the receptacle **(300)** is ensured to be in an expanded state;
**characterized in that:**
the outer surface **(312)** of the receptacle **(300)** in the expanded state adheres to an inner side **(202)** of the reservoir **(200)** upon contact and maintains a constant adherence with the inner side **(202)** of the reservoir **(200)**.

5. The method **(400)** of claim 4, wherein the outer surface **(312)** is composed of a thermally sensitive material.

6. The method **(400)** of claim 4 and 5, wherein the reservoir **(200)** is cleaned before retrofitting of the receptacle **(300)** with the reservoir **(200)**.

7. The method **(400)** of any of the claims 4, 5 or 6, wherein a U-shaped circular bracket **(500)** is used for coupling the periphery of the outer surface **(312)** of the receptacle **(300)** with the periphery of the reservoir **(200)**.
